# EUROPÄISCHE PATENTSCHRIFT

(11) **EP 3 819 088 B1**
(45) Veröffentlichungstag und Bekanntmachung des Hinweises auf die Patenterteilung: **06.04.2022**
(21) Anmeldenummer: 19207577.8
(22) Anmeldetag: 07.11.2019
(51) Int. Cl.: B25J 9/16

(54) **VERFAHREN ZUR BESTIMMUNG EINES SICHERHEITSBEREICHES UND ZUR BAHNPLANUNG FÜR ROBOTER**
METHOD FOR DETERMINING A SAFETY AREA AND FOR ROUTING ROBOTS
PROCÉDÉ DE DÉTERMINATION D'UNE ZONE DE SÉCURITÉ ET DE PLANIFICATION DE TRAJECTOIRE POUR ROBOTS

(43) Veröffentlichungstag der Anmeldung: 12.05.2021
(73) Patentinhaber: Siemens Aktiengesellschaft, 80333 München (DE)
(72) Erfinder: BÄR, Felix, 90461 Nürnberg (DE); GRAF, Dr. René, 90513 Zirndorf (DE); GROSS, Ralf, 90489 Nürnberg (DE)
(74) Vertreter: Siemens Patent Attorneys

(56) Entgegenhaltungen:
- EP-A2- 1 366 867
- DE-A1-102008 013 400

## Beschreibung

Die vorliegende Erfindung bezieht sich auf:
- Ein Verfahren zur Bestimmung eines Sicherheitsbereiches für einen Roboter gemäß dem Patentanspruch 1;
- ein Robotersystem zur Ausführung des Verfahrens zur Bestimmung eines Sicherheitsbereiches gemäß dem Patentanspruch 11 und
- ein Computerprogramm, welches die Schritte des Verfahrens zur Bestimmung eines Sicherheitsbereiches für einen Roboter ausführt gemäß dem Patentanspruch 12 .

Roboter sind universell einsetzbare Bewegungsautomaten, deren Bewegungen hinsichtlich Bewegungsfolge und Wegen bzw. Winkeln frei programmierbar und ggf. sensorgeführt sind. Diese Art von Robotern ist mit Greifern, Werkzeugen und anderen Fertigungsmitteln ausrüstbar und kann Handhabungs- und/oder Fertigungsaufgaben ausführen.

Der Betrieb von Robotern ist heute entweder nur hinter trennenden oder nicht-trennenden Schutzeinrichtungen möglich. Im Falle von nicht-trennenden Schutzeinrichtungen müssen die Signale dieser Einrichtungen fehlersicher ausgewertet werden, zB durch eine fehlersichere speicherprogrammierbare Steuerung. Trennende Schutzeinrichtungen sind zB mechanischen Abschirmungen, die verhindern, dass der Roboter aus dem ihm zugewiesenen Bereich heraus kommt. Außerdem verhindern diese meist als Zäune oder Gitter realisierten Absperrungen, dass Menschen unkontrolliert in den Arbeitsbereich des Roboters gelangen.

Inzwischen gibt es erste Ansätze, dass der Roboter in sich eine sichere Überwachung seiner Position hat, so dass in einer fehlersicheren Steuerung die Position des Roboters in kartesischen Koordinaten vorliegt und die Reaktion auf bestimmte Sicherheitseinrichtungen (Laserscanner, Lichtschranke, Türschalter, ...) abhängig von der aktuellen Position erfolgen kann. Fehlersichere Steuerungen unterscheiden sich von «normalen» Steuerungen durch die Überwachung von Ein- /Ausgängen und dem redundanten Ausführen des Steuerungsprogramms. Beispielsweise können in einer fehlersicheren Steuerung zwei «normale» Steuerungen verbaut sein, die das gleiche Programm parallel ablaufen lassen und die Teilergebnisse/Ergebnisse der beiden Steuerungen miteinander abgeglichen werden. Bei Ungleichheit erfolgt eine kontrollierte Abschaltung, so dass dadurch keine Gefährdungen verursacht werden.

Das Problem hierbei ist aber eine sichere Definition der Positionen und Reichweiten aller Sicherheitseinrichtungen. Diese Definition erfolgt in einer Planungsphase aktuell manuell, was fehleranfällig ist und die Abnahme erschwert. Außerdem muss gewährleistet sein, dass die Sicherheitsbereiche dem Roboter genügend Arbeitsraum lassen, damit er alle vorgesehenen Bewegungen ausführen kann.

In einer Roboterzelle sind zum einen dem Roboter definierte Bahnen/Trajektorien vorgegeben, die er im Rahmen seiner zu erledigenden Aufgaben abfahren soll, und zum anderen hat die Zelle definierte Sicherheitsbereiche, in denen sich der Roboter überhaupt bewegen darf. Diese Sicherheitsbereiche können aufgrund zusätzlicher Sicherheitseinrichtungen als momentan nicht verfügbar gekennzeichnet sein, so dass der Roboter diese nicht durchqueren oder nicht in diese eindringen darf.

Kann ein Roboter einen belegten Sicherheitsbereich nicht befahren/belegen, bleibt er stehen und muss auf die Freigabe des betreffenden Sicherheits(teil)bereiches warten. Abhängig von der Geometrie der Zelle und weiterer Sicherheitseinrichtungen ist aber ein automatisches Fortsetzen der Bewegung zulässig, ohne dass eine (manuelle) Quittierung zuvor erteilt werden muss. Diese Blockade reduziert jedoch die Produktivität der Roboterzelle.

Voraussetzung für die korrekte Berücksichtigung der Sicherheitsbereiche ist eine «kartesische Sicherheit» des Roboters, so dass dessen fehlersichere Steuerung die genaue Position kennt und somit reagieren kann. Der Begriff «kartesische Sicherheit» (engl «cartesian safety») beinhaltet: Die fehlersichere Steuerung einer Maschine im Allgemeinen und eines Roboters im Besonderen kennt die über die direkte Kinematik der Maschine/Roboter errechneten Positionen der Gelenke sowie des Tool-Center-Points (TCP) im kartesischen Raum. Grundvoraussetzung sind die fehlersichere Erfassung der Gelenkwinkel über entsprechende Sensoren sowie der manipulationssichere Datentransport von den Sensoren bis zur Steuerung über ein oder auch mehrere fehlersichere Bussysteme. Die Berechnung der direkten Kinematik muss in der fehlersicheren Steuerung vollständig mittels fehlersicherer Programmbausteine für die notwendigen Rechenschritte (Addition und Multiplikation) erfolgen.

Die Planung der Sicherheitsbereiche erfolgt manuell, was zum Teil auch daran liegt, dass die Planung der Bewegungen des Roboters unabhängig oder zu einem späteren Zeitpunkt erfolgt. Damit kann keine Korrelation zwischen der Roboterbewegung auf einer vorgegeben Trajektorie und dem/den Sicherheitsbereich(en) erfolgen, so dass letztere eher in der Größe des maximalen Arbeitsraumes des Roboters definiert werden, um die spätere Bewegung nicht einzuschränken.

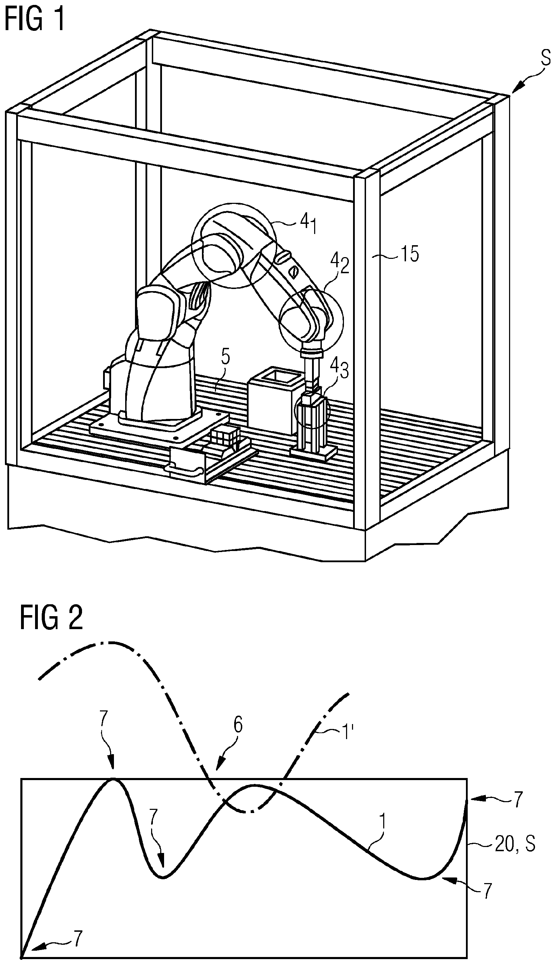

Dabei werden um die relevanten Gelenke und Punkte des Roboters, zB Tool Center Point TCP, Kugeln mit entsprechendem Radius gelegt und anschließend tangential zu den Kugeln Quader oder Ebenen definiert. Diese Quader/Ebenen dürfen vom Roboter wahlweise nicht verlassen oder betreten bzw. durchquert werden. In FIG 1 ist diese Situation für eine einen Roboter 5 enthaltende Roboterzelle 15 gezeigt, wobei der Sicherheitsbereich S in Form eines Quaders definiert wurde.

Die Schrift EP 1 366 867 A2 offenbart ein Verfahren, in dem ein Sicherheitsbereich um eine Trajektorie eines Roboters bestimmt wird und anhand dieses Sicherheitsbereichs Kollisionen mit weiteren Objekten, u.a. auch einem Roboter, vermieden werden.

Die Schrift DE 10 2008 013400 A1 offenbart ein Verfahren zur Vermeidung von Kollisionen zwischen Robotern, wobei Bereiche der Trajektorien der Roboter zweidimensional dargestellt werden und daraus Verriegelungsbereiche ermittelt werden.

In der Schrift WO 2018/051151 A1 [1] wird ein «Verfahren und ein Computersystem zum Simulieren und Zertifizieren des Sicherheitsmanagements für einen Bereich einer Produktionsanlage» offenbart, in der sich mindestens ein Roboter und mindestens ein Mensch befindet mit den

Verfahrensschritten:
a) Definieren einer Tabelle, die menschliche Extremitäten und entsprechende Gefährdungs-/Schadenspotentiale enthält;
b) Simulieren der Arbeitsvorgänge des Roboters, wodurch ein erstes Bewegungsraumvolumen bestimmt wird;
c) Simulieren der Aktion des Menschen, wodurch ein zweites Bewegungsraumvolumen bestimmt wird;
d) Bestimmungen von Durchdringungen der beiden Volumina unter Berücksichtigung der Gefährdungs-/Schadenspotentiale der beiden Volumina;
e) im Falle einer Durchdringung Neuanlage der Arbeitsvorgänge und Aktionen des Menschen, bis keine Durchdringung mehr oder die Gefährdungs-/Schadenspotentiale nicht erreicht werden.

In WO 2015/176802 A1 [2] ist ein «Verfahren zur Vermeidung von Kollisionen eines Roboters mit einem kooperierenden Arbeiter» offenbart, bei dem die kritischen (kollisionsgefährdete) Bahnpunkte und Bahnverläufe mittels einer Simulation ermittelt werden (zB Engpässe, Quetsch- oder Klemmstellen) und dort Kollisionen mittels eines einen Arbeiter nachbildenden Pendels (oder eines zweiten Roboters) nachgebildet werden und daraus die die Bewegung des ersten Roboters beeinflussenden Größen, zB die zulässige Verfahrgeschwindigkeiten des Roboters, ermittelt werden.

Nachteilig an diesen Verfahren ist in beiden Fällen der Umstand, als diese Verfahren in der Planungsphase nicht zertifiziert werden können und Blockierungssituation erst in Echtzeit, also im operationellen Betrieb gelöst werden.

Der vorliegenden Erfindung liegt daher die Aufgabe zugrunde ein Verfahren zur Bestimmung von Sicherheitsbereichen für einen Roboter anzugeben, das automatisiert zu einer vorgegebenen Trajektorie keine unnötigen Blockierungen des Roboters verursacht und bei dem der Sicherheitsbereich den Arbeitsbereich eines Roboters optimal ausnutzen. Ebenso soll ein Robotersystem und ein Computerprogramm zur Ausführung des Verfahrens zur Bestimmung von Sicherheitsbereichen für einen Roboter angegeben werden.

Diese Aufgabe wird durch die in den unabhängigen Patentansprüchen angegebenen Maßnahmen gelöst. Vorteilhafte Ausgestaltungen der Erfindung sind in weiteren Ansprüchen angegeben.

Das erfindungsgemäße Verfahren zeichnet sich aus durch ein:
Verfahren zur Bestimmung eines Sicherheitsbereiches für einen erste Roboter, der längs einer vorgegebenen Trajektorie Operationen ausführt, wobei für einen kollisionsfreien Betrieb ein Sicherheitsbereich durch folgende Verfahrensschritte bestimmt wird:
(A) Unterteilung der vorgegebenen Trajektorie in eine Mehrzahl von Teiltrajektorien;
(B) Bestimmung einer Mehrzahl von feingranularen um Extremalpunkte einer jeden Teiltrajektorie;
(C) Bestimmung einer Anzahl von optimierten Hüllquadern aus einer Vergrösserung einzelner feingranularer Hüllquader gegen das von den vergrösserten feingranularen Hüllquadern belegte Volumen, wobei die so bestimmten optimierten Hüllquader den Sicherheitsbereich für die Trajektorie bilden.

Die Vorteile dieser Lösung sind folgende:
i) Die herkömmliche Herangehensweise beim Erzeugen der Sicherheitsbereiche eines Roboters ist sehr zeitintensiv und erfordert spezielles Domänenwissen sowohl eines Safety- als auch eines Robotik-Experten. Dabei wird häufig aufgrund der Komplexität nicht die optimale Lösung gefunden. Im Zuge der Digitalisierung wird die Interaktion zwischen mehreren Robotern (und auch Menschen) innerhalb einer Bearbeitungszelle immer wichtiger. Durch das erfindungsgemässe Verfahren finden die Vorarbeiten dafür sowie eine rechenleistungsoptimierte Durchführung automatisiert in der Simulationsphase statt.
ii) Die Zertifizierung (zB durch eine TÜV-Stelle) solcher Safety-Szenarien kann durch das simulationsgestützte Verfahren besser veranschaulicht werden, indem bereits in der Simulation die Interaktion mit Sicherheitseinrichtungen gezeigt werden kann.
iii) Die Herangehensweise bei der Entwicklung des Safety-Konzepts wird effizienter, da die Simulation mögliche Gefahrenbereiche identifiziert und optional Vorschläge machen kann, um diese zu auszuschließen.

Besondere Ausführungsformen der vorliegenden Erfindung weisen folgende Vorteile auf:
Durch das Überlagern der zur Aufgabenbewältigung notwendigen Trajektorien kann der dazu korrespondierende Sicherheitsbereich der beteiligten Roboter vollständig bereits in der Simulationsphase bestimmt werden.

Die Reduktion der Anzahl der Sicherheitsbereiche erhöht die spätere Verarbeitungsgeschwindigkeit in der fehlersicheren Steuerung und somit die Produktivität der Fertigungszelle.

Mögliche Umsetzungen zB Einstellungen der Bänke der Laserscanner, Bereichsmuting von Lichtgittern, werden bereits im Simulationsprogramm automatisch bestimmt.

Durch das Überlagern von Sicherheitsbereichen zweier Roboter nach dem Semaphor-Prinzip entsteht der notwendige Kollisionsschutz von Maschinen bei gleichzeitig größtmöglicher Offenheit der Anlage und grösstmöglicher Flexibilität.

Mechanische Käfige um Roboter zu bauen, war in der Vergangenheit ein bewährtes Mittel. Mit dieser besonderen Ausführungsform ist es nicht mehr erforderlich, mechanische Käfige zu bauen. Dies ist auch wichtig, weil die Materialzulieferung heute mindestens teilweise auch mittels Roboter stattfindet.

Eine Neuberechnung einer Robotertrajektorie im laufenden Betrieb ist Stand der Technik. In einer weiteren Ausführungsform der Erfindung kann die Neuberechnung einer Trajektorie hingegen in der Planungsphase in einer fehlersicheren Steuerung unter Berücksichtigung zertifizierter Sicherheitsbereiche erfolgen. Der große Vorteil ist, dass die Produktivität des Roboters erhöht wird unter gleichzeitiger Einhaltung der zulässigen Sicherheitsbereiche. Die neu berechnete Trajektorie wird gespeichert, aber nur im Bedarfsfall - beim Auftreten einer Blockade in Echtzeit - verwendet. Die fehlersichere Steuerung verfügt also über eine Trajektorienbibliothek neu berechneter bzw alternativer Trajektorien.

Die Erfindung wird nachfolgend anhand der Zeichnung beispielsweise näher erläutert. Dabei zeigen:
Figur 1 Prinzipdarstellung eines Roboters in einer Roboterzelle;
Figur 2 Darstellung einer zu verhindernden Kollisions-/Blockiersituation;
Figur 3a Disposition eines globalen Hüllquaders;
Figur 3b, 3c Visualisierung der Verfahrensschritte zur Generierung optimaler Sicherheitsbereiche für eine Robotertrajektorie;
Figur 4 Ergebnis der Verfahrensschritte zur Generierung eines optimalen Sicherheitsbereiches für eine Mehrzahl von Robotertrajektorien;
Figur 5 Darstellung zweier Roboterzellen mit einem Semaphor-Bereich;
Figur 6a Überlagerung der Sicherheitsbereiche der Trajektorien zweier Roboter mit einem Kollisionsbereich/Semphor-Bereich;
Figur 6b Neuberechnung der Sicherheitsbereiche der Trajektorien zweier Roboter mit Kollisionsbereich in einem eigenem Sicherheitsbereich;
Figur 7 Darstellung einer neu berechneten Trajektorie auf Basis eines vorgegebenen Semphor-Bereiches;
Figur 8 Robotersystem umfassend mehrere Roboter und eine fehlersichere Steuerung.

Im Sinne dieser Schrift wird folgende Terminologie und eine entsprechende Hierarchie der Begriffe verwendet:
i) Ein Bereich wird gebildet aus mindestens einem Hüllquader.
ii) Hüllquader haben eine verschiedene Granularität aufgrund der Verfahrensschritte, so wird in absteigender Granularität unterschieden in:
   - feingranulare Hüllquader 21;
   - optimierte Hüllquader 22;
   - globale Hüllquader 20.

Abhängig von der Betrachtungsweise werden die vorstehenden Begriffe wie folgt weiter unterschieden:
Sicherheitsbereich S und Arbeitsbereich A.

Entgegen der üblichen Bedeutung eines Sicherheitsbereich S und eines Arbeitsbereich A zB bei einem Feuerwehr-Einsatz bei dem der Sicherheitsbereich (=Absperrung für das Publikum deutlich grösser ist als der Arbeitsbereich der Feuerwehrsoldaten) gilt im Sinne dieser Technologie
S ⊆ A.

Der Arbeitsbereich A eines Roboters 5 bezeichnet den Raum, den ein Roboter 5 potentiell erreichen kann. Der Sicherheitsbereich S eines Roboters 5 ist jener Teilraum des Arbeitsraumes A, nämlich
S ⊆ A ,
in dem sich der Roboter 5 ohne Kollisionsgefahr mit anderen Objekten bewegen darf.

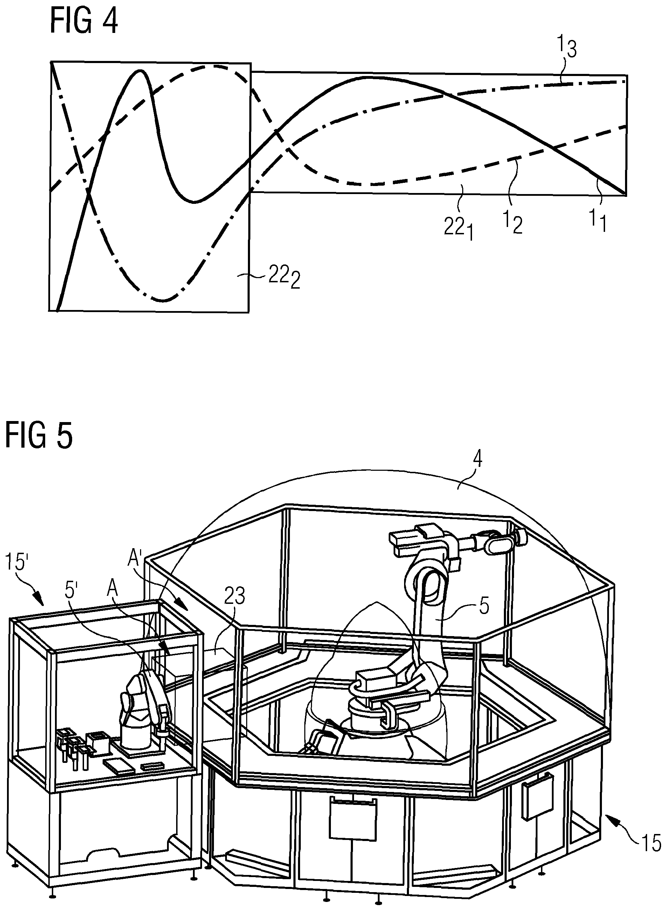

Diese Beziehungen sind aus FIG 5 ersichtlich. FIG 5 zeigt eine potentielle Kollisionszone 23 je einer Trajektorie eines Roboters 5 und eines Roboters 5'. Diese Kollisionszone 23 ist durch eine Überlagerung zweier in der FIG 5 nicht dargestellter Sicherheitsbereiche S und S' entstanden. In FIG 5 sind hingegen die (grösseren) Arbeitsbereiche A und A' dargestellt, wobei die Bezugszeichen mit den Pfeilen A und A' nicht verstauscht sind: Damit soll auch nochmals gezeigt werden, dass folgende Beziehung gilt (vgl. oben):
A ⊇ S und A' ⊇ S'.

FIG 1 zeigt eine Roboterzelle 15, die einen Roboter 5 enthält. Der Sicherheitsbereich S der Roboterzelle 15 wird gebildet durch ein Quader, der Arbeitsbereich A ist grösser, wie unschwer aus der FIG 1 ersichtlich ist: Wäre der Sicherheitsbereich S mit Scheiben begrenzt, könnte der Roboter 5 durch unerlaubte Bewegungen die Scheiben durchdringen und dadurch zerstören.

Ein Hüllquader 20 kann gebildet werden um eine Mehrzahl von Begrenzungskugeln 4 und/oder Hüllellipsoiden 4. Drei solche Begrenzungskugeln 4₁, 4₂ und 4₃ sind in FIG 1 dargestellt. Die Begrenzungskugeln 4₁, 4₂ und 4₃ werden um die relevanten Gelenke und Punkte des Roboters, zB Tool Center Point TCP, mit entsprechendem Radius gelegt und anschließend tangential zu den Kugeln Quader oder Ebenen definiert. Um eine Mehrzahl solcher Begrenzungskugeln 4 wird ein Hüllquader 20 gelegt. Im konkreten Fall der FIG 1 stellt der Rahmen nicht das Hüllquader 20, sondern den mit dem Hüllquader 20 definierten Sicherheitsbereich S dar. Der Hüllquader 20 ist in FIG 1 nicht referenziert.

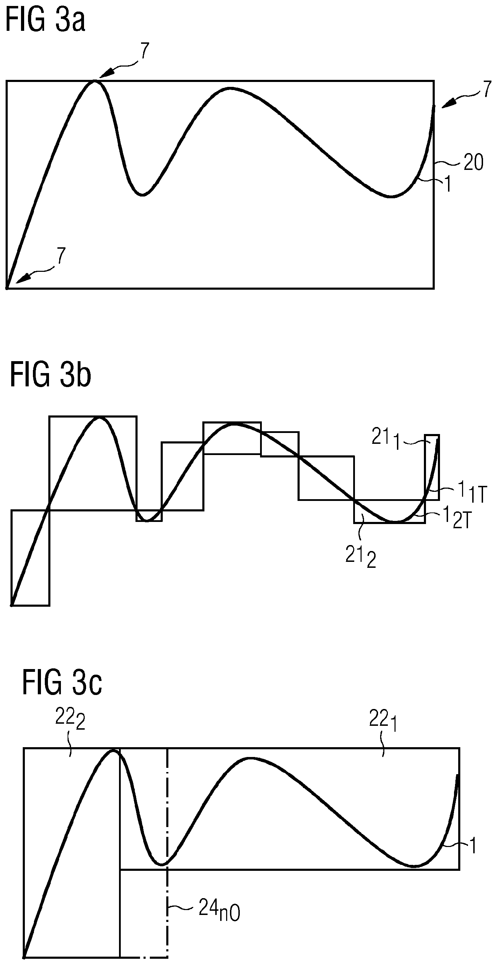

Ein Roboter 5 bewege sich - wie in FIG 3a dargestellt - längs einer Trajektorie 1. In der vereinfachten Darstellung gemäß der FIG 3a: Der Hüllquader 20 wird durch die Extremalpunkte 7 der Trajektorie 1 bestimmt. In FIG 3a sind nur jene Extremalpunkte mit einem Bezugszeichen 7 versehen, die etwas zur Dimensionierung des Hüllquaders 20 beitragen. An dieser Stelle wird erwähnt, dass die FIG 2, FIG 3a, ... eine zweidimensionale Sicht eines dreidimensionalen Raumes beinhalten. Wie vorstehend erläutert, kommt für die Bestimmung der Hüllquader nicht der Extremalpunkt 7 allein, sondern die bei einem Extremalpunkt 7 zutreffende Disposition eines Roboters 5 mit den jeweiligen Begrenzungskugeln 4 hinzu. In einer vereinfachten Ausführung ist es auch möglich, pro Extremalpunkt 7 eine fixe Disposition des Roboters 5 anzunehmen und dem entsprechend von fix vorgegebenen Begrenzungskugeln 4 auszugehen.

In FIG 2 ist eine potentielle Kollisions- bzw. Blockierungssituation dargestellt. Eine tatsächliche Kollisions- bzw. Blockierungssituation hängt vom zeitlichen Ablauf des Prozesses von beteiligten Robotern 5, 5', ... ab. Zur Trajektorie 1 eines ersten Roboters 5 ist wie vorstehend erwähnt ein Hüllquader 20 über Extremalpunkte 7 dieser Trajektorie 1 definiert, der in diesem Fall mit dem zur Trajektorie 1 zugehörigen Sicherheitsbereich S zusammenfällt. Für einen zweiten Roboter 5' ist eine Trajektorie 1' vorgesehen. Bewegt sich nun der Roboter 5' gemäß der FIG 2 von links nach rechts auf der Trajektorie 1', wird beim Pfeil 6 ein Eindringen in den Sicherheitsbereich S des Roboters 5 versucht. Eine Steuerung wird den Roboter 5' anhalten. Mit diesem gross dimensionierten Sicherheitsbereich S ergibt sich eine Blockierung auch dann, wenn der Roboter 5 ausserhalb der Reichweite des Roboters 5' ist.

Zur Bestimmung eines optimalen Sicherheitsbereiches S sind Verfahrensschritte vorgesehen, die nachfolgend zusammen mit den FIG 3b und FIG 3c erläutert werden.
Die Trajektorie 1 eines Roboters 5 ist hier zweidimensional dargestellt, die Trajektorie ist aber in der Realität dreidimensional. Im weiteren Verlauf der Erklärung wird mit Kugeln und die Kugeln umgebenden Quadern Bezug genommen, aber eine Variante mit Kugeln und/oder Ellipsoiden und/oder Flächen/Ebenen funktioniert nach dem exakt gleichen Prinzip. In FIG 3b wird die Trajektorie 1 in Teiltrajektorien 1_{1T}, 1_{2T}, ... geteilt. Um jede Teiltrajektorie 1_{1T}, 1_{2T}, ... werden über die Extremalpunkte 7 der betreffenden Teiltrajektorie ein Hüllquader 21₁, 21₂, ... gelegt. Zur Vereinfachung der Darstellung sind nicht alle Hüllquader indiziert bezeichnet.

Im operationellen Betrieb ist diese Mehrzahl/Vielzahl solcher feingranularer Hüllquader 21₁, 21₂, ... nicht geeignet, da dadurch die Rechenzeit für eine «kartesischen Sicherheit» exorbitant ansteigt, da zu viele Hüllquader 21 gegen die Kugeln an einem Roboter 5 geprüft werden müssten. Daher wird über ein Optimierungsverfahren durch Vergrösserung einzelner feingranularer Hüllquader 21₁, 21₂, ... die Kombination aus Anzahl Hüllquader und belegtem Volumen optimiert. Möglich ist auch, die Anzahl optimierter Hüllquader fest vorzugeben und den von dieser fest vorgegebenen Anzahl das von ihnen belegte Volumen zu minimieren. Gemäß der FIG 3c sind zwei optimierte Hüllquader 22₁ und 22₂ dargestellt. Dadurch braucht am wenigsten Raum/Volumen überwacht werden, den der Roboter 5 ohnehin nicht durchfährt, bei gleichzeitiger minimal notwendiger Rechenleistung. Zur Erläuterung der Optimierung von einzelnen feingranularen Hüllquadern 21 gegen das von ihnen belegte Volumen ist in FIG 3c ein nichtoptimiertes Hüllquader 24_{nO} in strichpunktierter Weise eingetragen; dem entsprechend müsste das rechts dargestellte Hüllquader 22₁ verkürzt dargestellt sein, das ist aufgrund der Offensichtlichkeit in FIG 3c nicht dargestellt.

Neben der vorgegebenen Trajektorie 1 des Roboters 5 erlauben Simulationsprogramme wie zB ProcessSimulate auch die Berücksichtigung von statischen Hindernissen in der Fertigungszelle 15, da diese im 3D-CAD-Modell als verfügbare Geometrien entsprechend vorliegen, was bei einem globalen Hüllquader 20 nicht möglich ist.

Da ein Roboter 5 nicht nur eine, sondern mehrere Trajektorien 1₁, 1₂, ... zur Erfüllung seiner Mission in seiner Roboterzelle 15 abfahren muss, ist das vorstehend erläuterte Verfahren entsprechend mehrstufig anzuwenden und berücksichtigt alle diese Trajektorien 1₁, 1₂, ... wie dies nachstehend in Tabelle 1 gezeigt ist. Das Ergebnis dieses mehrstufig anzuwendenden Verfahrens ist in FIG 4 dargestellt mit den vom Roboter 5 zu befahrenden Trajektorien 1₁, 1₂, ... und hier zwei optimierten Hüllquadern 22₁, 22₂. Tabelle 1 zeigt den Ablauf zur Bestimmung der Sicherheitsbereiche S₁, S₂, ... zu einer Mehrzahl von von einem Roboter 5 abzufahrenden Trajektorien 1₁, 1₂, ....

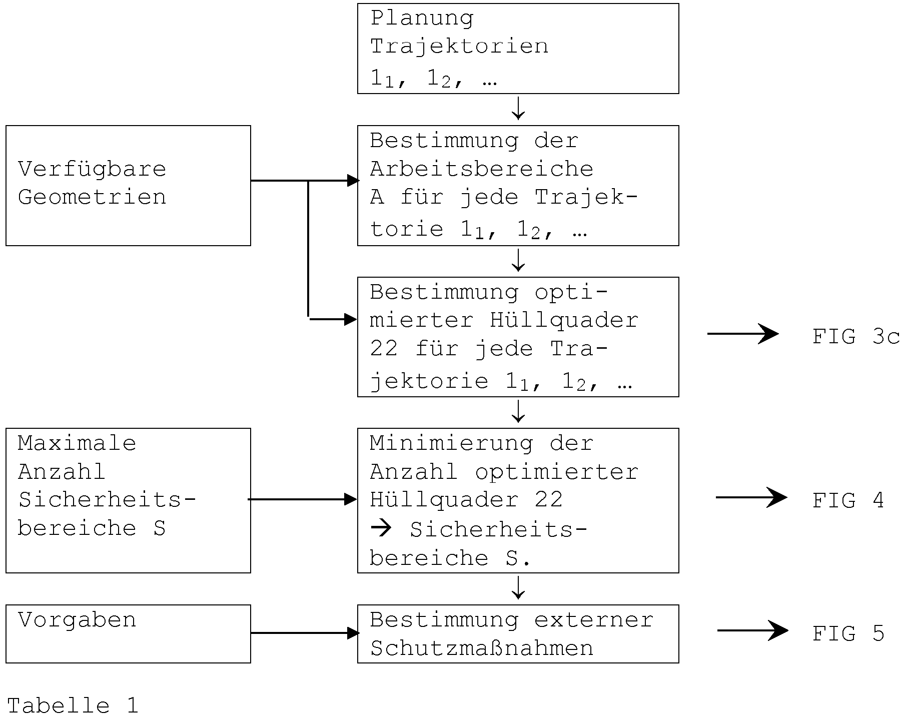

Nach der Bestimmung der optimierten Hüllquader 22, 22', ... für jede einzelne Trajektorie 1₁, 1₂, ... werden die optimierten Hüllquader 22 (hier ohne Indizierung) überlagert und deren Gesamtanzahl durch Kombination und Größenänderung einzelner Hüllquader minimiert. Die Bestimmung externer Schutzmaßnahmen kann beinhalten:
Es werden Lichtgitter oder Laserscanner an den äußeren Rändern der durch die optimierten Hüllquader 22 definierten Sicherheitsbereiche S positioniert und die Reichweite der Felder (Laserscanner) berechnet. Sicherheits-Lichtgitter wirken in einer Fläche durch gegenüberliegende Sender und Empfänger für Lichtstrahlen. Werden die Lichtstrahlen unterbrochen zB bei Durchdringung des Lichtgitters mit einem Gegenstand, wird eine entsprechende Sicherheitsfunktion ausgelöst, zB Stopp einer Roboterbewegung. Laserscanner können die Distanz zu einem Gegenstand bestimmen, dh hier kann beim Eindringen eine distanzabhängige Reaktion erfolgen, zB Verlangsamung eines Roboters bei größerer Distanz und Stopp bei kürzerer Distanz.

Als Schutzmaßnahme ist weiterhin zB auch ein Sicherheitsschalter anzusehen, der durch das Öffnen einer Tür betätigt wird und mittels der fehlersicheren Steuerung einen Stopp auslöst, der keine Gefährdung bewirkt. Allgemein: Der Sicherheitsbereich S kann durch mechanische Begrenzungen ausgezeichnet sein, wobei eine Türe lediglich ein Beispiel einer solchen Begrenzung ist. Des Weiteren werden die geometrischen Daten der Hüllquader 22 in einer für die fehlersichere Steuerung 31 lesbaren Form gespeichert, so dass diese ohne manuelle und damit fehleranfällige Schritte von der Simulation/Berechnung in die fehlersichere Steuerung 31 übernommen werden können.

In einer Fertigungszelle 15 sind meistens mehrere Roboter 5, 5', ... vorhanden, so dass das vorstehend erläuterte Verfahren um einen weiteren Verfahrensschritt ergänzt werden muss. Da sich die Arbeitsräume A, A', ... der Roboter 5, 5', ... überlappen bzw. überlappen müssen, ist auch sicherzustellen werden, dass die Roboter 5, 5', ... im operationellen Betrieb nicht miteinander kollidieren. Das Verfahren gemäß der Tabelle 1 wird somit um die Berücksichtigung der einzeln bestimmten Sicherheitsbereiche S, S', ... der Roboter 5, 5', ... erweitert, wie dies in Tabelle 2 gezeigt wird. Dazu wird zwischen der Optimierung der einzelnen Hüllquader 22 und der automatischen Ableitung der Sicherheitsbereiche S, S', ... und Sicherheitsmaßnahmen eine Superposition der Trajektorien 1, 1', ... der betreffenden Roboter 5, 5', ... vorgenommen.

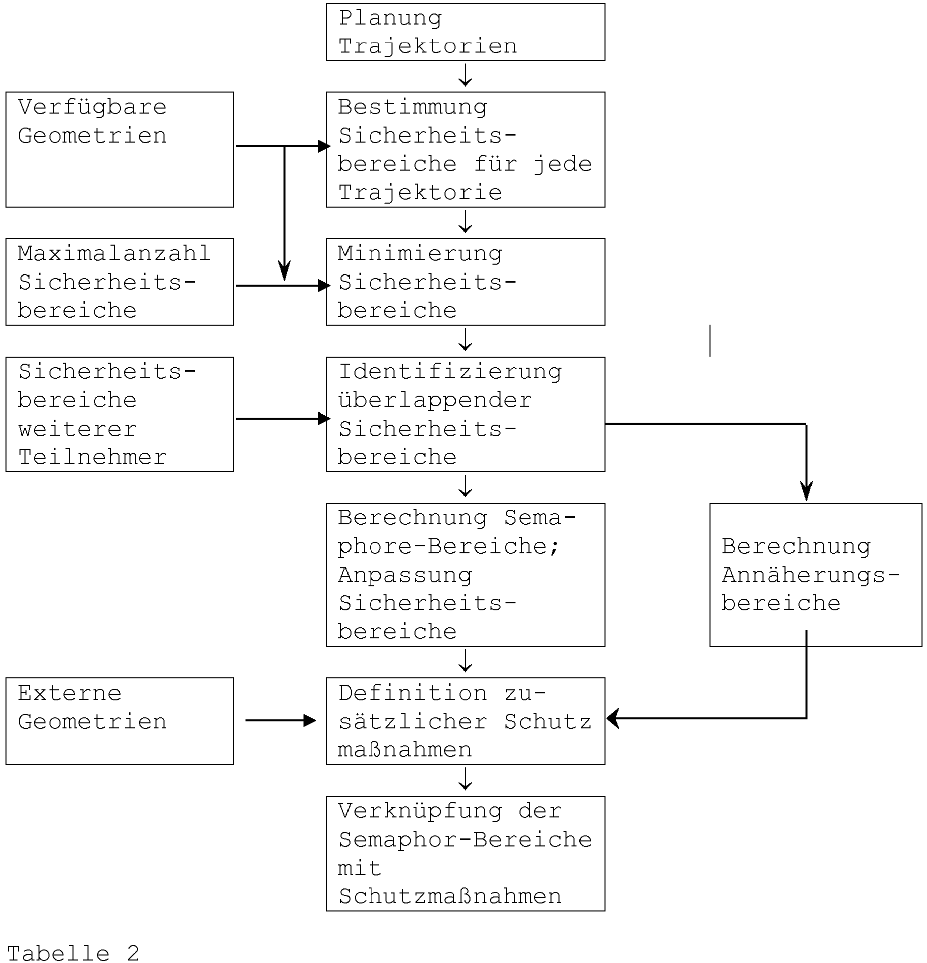

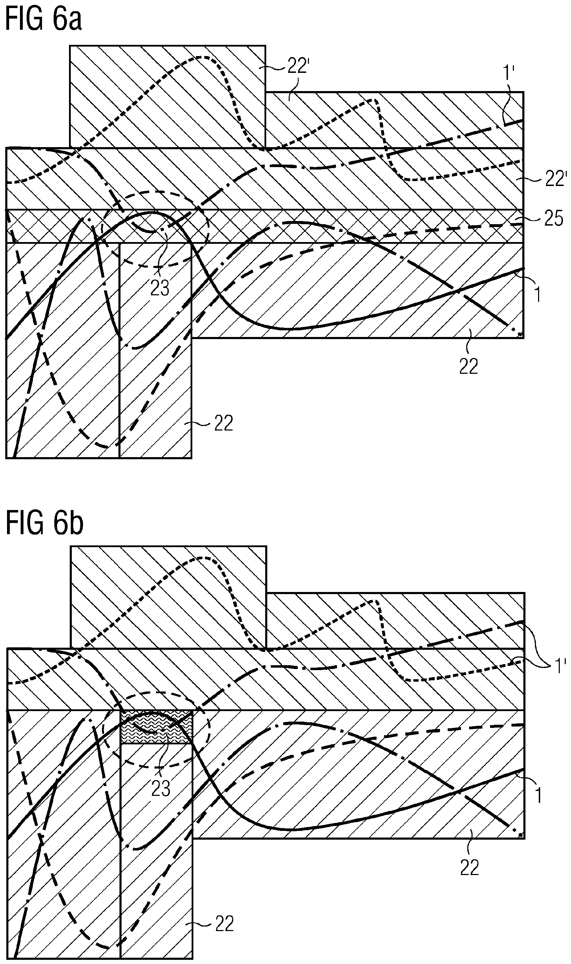

Die Situation für einen ersten Roboter 5 mit einer Trajektorie 1 und der Trajektorie 1' eines weiteren Teilnehmers 5' oder eines weiteren Roboters 5' ist in FIG 6a dargestellt. Der Sicherheitsbereich S des Roboters 5 wird durch die Vereinigung der optimierten Hüllquader 22 definiert, wobei die nachstehende Formel nicht indiziert ist:
S = u 22ᵢ . Eine reine Überlappung/Superposition der definierten Sicherheitsbereiche S, S' mit den optimierten Hüllquadern 22, 22' ist hierzu nicht ausreichend, der überlappende Bereich ist in FIG 6a als Überlagerungsbereich 25 bezeichnet. Eine weitere Überprüfung ist zwingend erforderlich, da sich mindestens geometrisch die beiden Trajektorien 1, 1' kreuzen. Im Bereich dieses Überlagerungsbereiches 25 werden, wie in den FIG 6a und 6b gezeigt, die Trajektorien 1 des einen Roboters 5 mit den Sicherheitsbereichen S bzw. den optimierten Hüllquadern 22' des anderen Roboters 5' abgeglichen. Im Bespiel gemäss der FIG 6a durchläuft die Trajektorie 1 des Roboters 5 die Sicherheitszone S' bzw. das optimierte Hüllquader 22' des anderen Roboters 5': Dies ist hervorgehoben mit dem Kreis in der FIG 6a. Aus Übersichtlichkeitsgründen sind die Hüllquader 22 und 22' in den FIG 6a und 6b nicht weiter indiziert dargestellt.

Daraufhin wird zunächst ein sogenannter Semaphor-Bereich 23 definiert. Dieser Semaphor-Bereich 23 ist im Überlappungsbereich 25 enthalten, vgl FIG 6b. Der Semaphor-Bereich 23 hat ebenfalls die Ausgestaltung eines Quaders. Anschließend werden die bisherigen optimierten Hüllquader 22 beider Roboter 5, 5' in ihrer Größe so angepasst bzw. in kleinere Quader zerteilt bzw. minimiert, dass sie keine Überlappungen mit dem Semaphor-Bereich 23 mehr haben, jedoch die restlichen Trajektorien 1, 1' ihrer eigenen Roboter 5, 5' vollständig umschließen. Der Semaphor-Bereich 23 ist nach dem Semaphor-Prinzip aus der Informatik benannt, das ein gegenseitiges Ausschließen («mutual exclusion») definiert. Will einer der Roboter eine Trajektorie abfahren, die diesen Semaphor-Bereich 23 durchquert, muss dieser Roboter zuerst eine Erlaubnis zur Durchfahrt anfordern («Take Semaphore»). Ist der Semaphor-Bereich 23 frei, bekommt der anfordernde Roboter die Erlaubnis zur Durchfahrt auf der vorgesehenen Trajektorie. Ist der Semaphor-Bereich 23 hingegen gerade von einem anderen Roboter belegt, wird der anfordernde Roboter entweder blockiert, bis der Semaphor-Bereich 23 frei wird, oder der Roboter bekommt eine entsprechende Fehlermeldung/Hinweismeldung. Auf eine solche Meldung kann der anfordernde Roboter reagieren kann, beispielsweise in dem er zunächst eine andere Trajektorie abfährt, sofern dies operationell zulässig ist.

Nach dem Durchqueren des Semaphor-Bereiches 23 muss dieser unmittelbar freigegeben («Release Semaphore») werden, damit der andere Roboter diesen Semaphor-Bereich 23 möglichst schnell zugeteilt erhält.

Das Verfahren ist nicht auf zwei Roboter begrenzt, sondern für N Roboter ausgelegt. Auch dabei gilt das Prinzip der Minimierung der notwendigen Bereiche inklusive der Semaphor-Bereiche 23.

Ebenso kann das vorstehende Verfahren auch für andere Objekte verwendet werden, die in einen Kollisionsbereich mit einem Roboter eindringen können, zB ein manuell geführter Gabelstapler, der dem Roboter eine Palette anliefert. Auch der Gabelstapler bzw. dessen Führer muss den Semaphor-Bereich anfordern und nach Beendigung der Belegung wieder freigeben. Dies kann auch implizit über eine Ampel und eine Überwachung des Gabelstaplerbereich (zB mittels Laserscanner) erfolgen. Damit wird auch eine Kollaboration eines Menschen mit einem Roboter möglich, da auch dessen Bewegungen bereits in der Simulationsphase berücksichtigt und als «N+1» Roboter modelliert werden. Alle weiteren Schritte dieses Verfahrens laufen anschließend wie bisher automatisiert und liefern unter Berücksichtigung der notwendigen Vorgaben (vgl Tabelle 1 und Tabelle 2) die passenden Sicherheitsbereiche auf Basis der optimierten Hüllquader.

Da die Blockade eines Roboters 5 durch einen dynamisch belegten Semaphor-Bereich 23 nicht vorhersagbar ist, wird der Roboter 5 in der Ausführung seiner aktuellen Aufgabe gestoppt und kann diese erst nach Freigabe des zuvor belegten Bereichs fortsetzen, wie dies vorstehend beschrieben ist.

Um dieses Problem auch zu lösen, müssen auch die Trajektorien 1, 1' der Roboter 5, 5' ... dynamisch geplant werden. Das Konzept der dynamischen Trajektorienplanung ist bei Robotern bekannt, geht aber in der Regel davon aus, dass dem Roboter ein entsprechend großer Arbeitsraum A auch jenseits des für die vorgegebenen Trajektorien notwendigen Umfangs zur Verfügung steht. Klassisch steht der Roboter in einer mit Gittern oder ähnlichen trennenden Schutzeinrichtungen abgeriegelten Roboterzelle.

Auf Basis des vorhin erläuterten Konzeptes der Bestimmung eines Sicherheitsbereiche S, der aus einer Mehrzahl von optimierten Hüllquadern 22 gebildet sind, werden die so definierten optimierten Hüllquader 22 als Grundlage für eine dynamische Trajektorienplanung genommen. Daher findet diese Berechnung in einer fehlersicheren Steuerung 31 statt, so dass die Sicherheit des Roboters auch für eine neue Trajektorie jederzeit vollständig und zertifiziert garantiert werden kann.

Zur Sicherstellung der korrekten Ausführung einer neuen Trajektorie innerhalb der zulässigen Bereiche muss die Roboter-Steuerung über das Feature «kartesische Sicherheit» verfügen, so dass die fehlersichere Steuerung 31 auch weiß, wo ein Roboter 5' sich tatsächlich befindet. Die «kartesische Sicherheit» ist nur im Zusammenspiel zwischen Roboter mit fehlersicheren Encodern (Gelenkwinkelsensoren) und fehlersicherer Steuerung gewährleistet. Das Ergebnis der Trajektorienplanung wird wiederum zunächst in die übergeordnete Berechnung der optimierten Hüllquader 22 gegeben, so dass aufgrund einer neuen, zusätzlichen Trajektorie eine Neuberechnung stattfinden kann.

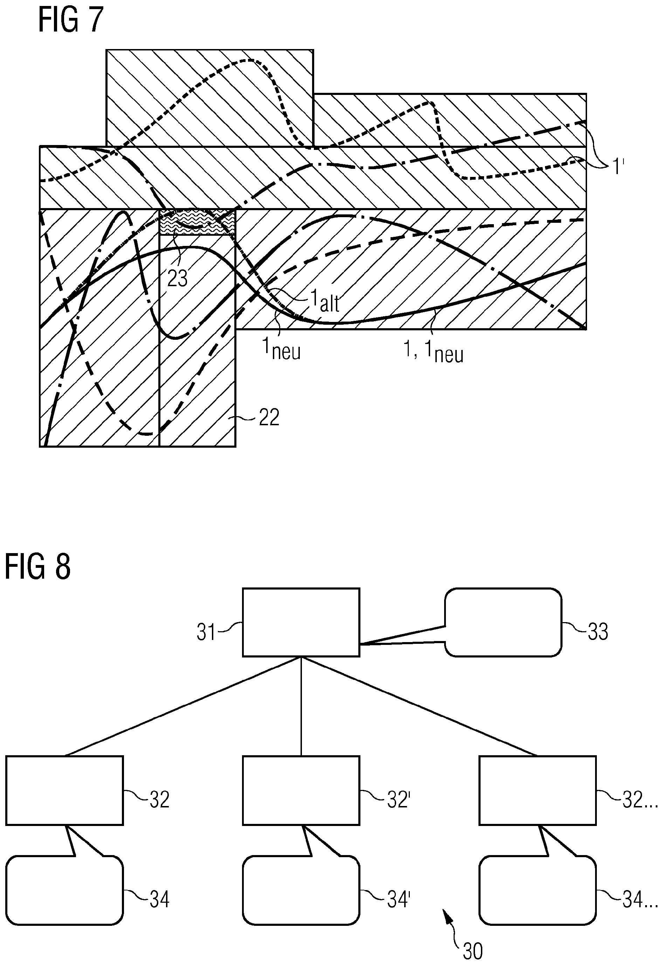

Die FIG 6b zeigt den bekannten Fall, dass die Trajektorie 1 nicht ausgeführt werden kann, weil der Semaphor-Bereich 23 belegt ist. Daher wird eine Neuberechnung/Neuplanung auf Basis der definierten optimierten Hüllquader 22 vorgenommen, die am Semaphor-Bereich 23 vorbei führt. Diese Trajektorie 1ₙₑᵤ wird zunächst validiert, dass sie nicht zu einem weiteren Semaphor-Bereich 23' führt. Die neue Trajektorie 1ₙₑᵤ unterscheidet sich von der alten Trajektorie 1 nur in Teiltrajektorien. Diese neue Trajektorie 1ₙₑᵤ wird in die Liste der zulässigen Trajektorien aufgenommen, aber nur im Falle von belegten Semaphor-Bereichen 23 verwendet, da sie erwartungsgemäß im Gegensatz zur ursprünglichen Trajektorie 1 ineffizienter ist. Anstelle von Liste wird auch der Begriff Trajektorienbibliothek verwendet. In einem Konfliktfall ist eine aus der Trajektorienbibliothek entnommene Trajektorie effizienter, da die originäre Trajektorie blockiert ist und somit zu Verzögerungen führt. Das Ergebnis der Neuberechnung einer Trajektorie ist in FIG 7 dargestellt.

Für die neue Trajektorie 1ₙₑᵤ ist auch implizit garantiert, dass der Roboter 5 auf dieser neuen Trajektorie 1ₙₑᵤ mit keinem statischen Hindernis in der Fertigungszelle 15 kollidiert, da die auf Basis der optimierten Hüllquader 22 erlaubten Sicherheitsbereiche S, S' auch die Geometrie einer Roboterzelle 15 mit all ihren Gerätschaften abbilden. Diese Eigenschaft gilt selbstverständlich auch für die eingangs erläuterte Bestimmung eines Sicherheitsbereiches S für eine vorgegebene Trajektorie 1 eines Roboters 5.

FIG 8 zeigt die Steuerungsarchitektur, bei der eine übergeordnete fehlersichere Steuerung 31 die Semaphor-Bereiche 23 verwaltet. Die unterlagerten Roboter-Steuerungen der einzelnen Roboter 5', 5", ... müssen bezüglich dieser Semaphor-Bereiche 23 im Echtzeitbetrieb eine Anfrage 34', 34", ..., starten, um nach erfolgter Zuweisung den entsprechenden Semaphor-Bereich 23 belegen zu können - sei es durch Befahren oder sei es durch eine Operation mit einem Arm des betreffenden Roboters 5', 5", .... Nach erfolgter Benutzung muss der betreffende Roboter 5', 5", ... den nicht mehr benötigten und nicht mehr belegten Semaphor-Bereich 23 wieder freigegeben. Der Vorteil dieser übergeordneten fehlersicheren Steuerung 31 liegt darin, bei der Vergabe der Semaphor-Bereiche 23 weitere Parameter berücksichtigen zu können, zB die Priorität der Aufträge der einzelnen Roboter 5', 5", ....

Die dynamische Trajektorienplanung mit einer Trajektorienbibliothek für einen weiteren Roboters 5' wird von der übergeordnete fehlersicheren Steuerung 31 vorgenommen. In dieser übergeordneten fehlersicheren Steuerung 31 liegen alle Daten zu allen Sicherheitsbereichen/optimierten Hüllquadern 22 und zu den Semaphor-Bereichen 23 vor → Verwaltung 33 der Semaphor-Bereich. Dadurch ist sichergestellt, dass eine neue dynamisch generierte Trajektorie nicht zu einem Semaphor-Bereich führt. Ein neuer Semaphor-Bereich könnte zu neuen Blockaden führen und der Verwaltungsaufwand in der übergeordneten fehlersicheren Steuerung 31 massiv erhöhen. Anstelle des Begriffs «übergeordnete fehlersichere Steuerung» wird auch der Begriff «zentrale fehlersichere Steuerung» verwendet.

### Liste der Bezugszeichen, Glossar

1 Trajektorie eines (ersten) Roboters, Roboterbahn
1_{1T}, 1_{2T}, ... Teiltrajektorie eines (ersten) Roboters
1₁, 1₂, ... Trajektorien eines (ersten) Roboters
1', 1", ... Trajektorie weiterer Roboter, Trajektorie weiterer Teilnehmer
4; 4₁; 4₂; ... Hüllkugel, Begrenzungskugel, Hüllellipsoid
5 Roboter, erster Roboter
5', 5", ... weitere Roboter, weitere Teilnehmer
6 (Versuchtes) Eindringen in einen Sicherheitsbereich
7 Extremalpunkte einer Trajektorie
15 Roboterzelle; Fertigungszelle
20 Hüllquader, globales Hüllquader eines (ersten) Roboters
20', 20" Hüllquader, globales Hüllquader der weiteren Roboter, Hüllquader, globales Hüllquader der weiteren Teilnehmer
21 feingranulare Hüllquader eines (ersten) Roboters
21', 21" feingranulare Hüllquader der weiteren Roboter, feingranulare Hüllquader der weiteren Teilnehmer
21_{1T}, 21_{2T}, ... feingranularer Hüllquader entsprechend einer Teiltrajektorie 1_{1T}, 1_{2T}, ...
22 optimierte Hüllquader eines (ersten) Roboters
22', 22" optimierte Hüllquader der weiteren Roboter optimierte Hüllquader der weiteren Teilnehmer
22₁, 22₂, ... optimierter Hüllquader entsprechend einer Mehrzahl feingranularer Hüllquader 21_{1T}, 21_{2T}, ... ,
24no Beispiel eines nichtoptimierten Hüllquaders
23 Kollisionsbereich, Semaphor-Bereich
25 Überlagerung/Überlappung zweier Sicherheitsbereiche bzw. zweier optimierter Hüllquader; Überlagerungsbereich
30 Robotersystem, Roboteranlage
31 Fehlersichere Steuerung
32 Lokale Steuerung erster Roboter
32', 32", ..., Lokale Steuerung weiterer Roboter
33 Verwaltung Semaphor-Bereiche
34', 34", ..., Anfrage/Nutzung/Freigabe eines Semaphor-Bereiches durch einen Roboter 5', 5", ...
A, A', ... , Arbeitsbereich eines Roboters 5', 5", ...
S, S', ... , Sicherheitsbereich eines Roboters 5', 5", ...
S₁, S₂, ... Sicherheitsbereich zu den Trajektorien 1₁, 1₂, ... eines Roboters 5
TCP Tool Center Point

### Liste der zitierten Dokumente

[1] WO 2018/051151 A1 A METHOD AND A SYSTEM FOR SIMULATING AND CERTIFYING SAFETY MANAGEMENT FOR AN AREA OF A PRODUCTION PLANT SIEMENS INDUSTRY SOFTWARE LTD.; IL - 7019900 Airport City Veröffentlichungsdatum 22. März 2018 (22.03.2018)
[2] WO 2015/176802 A1 VERFAHREN ZUR VERMEIDUNG VON KOLLISIONEN EINES ROBOTERS IN EINER ARBEITSSTATION DAIMLER AG, DE - 70327 Stuttgart Veröffentlichungsdatum 26. November 2015 (26.11.2015)

## Patentansprüche

1. Verfahren zur Bestimmung eines Sicherheitsbereiches (S) für einen ersten Roboter (5), der längs einer vorgegebenen Trajektorie (1) Operationen ausführt, wobei für einen kollisionsfreien Betrieb ein Sicherheitsbereich (S) durch folgende Verfahrensschritte bestimmt wird:
(A) Unterteilung der vorgegebenen Trajektorie (1) in eine Mehrzahl von Teiltrajektorien (1_{1T}, 1_{2T}, ...) ;
(B) Bestimmung einer Mehrzahl von feingranularen Hüllquadern (21_{1T}, 21_{2T}, ...) um Extremalpunkte (7) einer jeden Teiltrajektorie (1_{1T}, 1_{2T}, ...) ;
(C) Bestimmung einer Anzahl von optimierten Hüllquadern (22₁, 22₂, ... ) aus einer Vergrösserung einzelner feingranularer Hüllquader (21_{1T}, 21_{2T}, ..., ) gegen das von den vergrösserten feingranularen Hüllquadern belegte Volumen, wobei die so bestimmten optimierten Hüllquader (22₁, 22₂, ... ) den Sicherheitsbereich (S) für die Trajektorie (1) bilden.

2. Verfahren nach Anspruch 1,
**dadurch gekennzeichnet, dass**
im Verfahrensschritt (B) den auszuführenden Operationen entsprechende Bewegungsräume des ersten Roboters (5) durch Hüllkugeln (4, 4₁, 4₂, ... ) definiert werden, wobei jede Hüllkugel (4, 4₁, 4₂, ... ) den maximal beanspruchten Bewegungsraum pro Extremalpunkt (7) repräsentiert und die feingranularen Hüllquader (21_{1T}, 21_{2T}, ... ) so bestimmt werden, dass sie die Hüllkugeln (4, 4₁, 4₂, ... ) umgeben.

3. Verfahren nach Anspruch 1,
**dadurch gekennzeichnet, dass**
im Verfahrensschritt (B) den auszuführenden Operationen entsprechende Bewegungsräume des ersten Roboters (5) durch Hüllellipsoiden (4, 4₁, 4₂, ... ) definiert werden, wobei jede Hüllellipsoide (4, 4₁, 4₂, ... ) den maximal beanspruchten Bewegungsraum pro Extremalpunkt (7) repräsentiert und die feingranularen Hüllquader (21_{1T}, 21_{2T}, ... ) so bestimmt werden, dass sie die Hüllellipsoiden (4, 4₁, 4₂, ... ) umgeben.

4. Verfahren nach Anspruch 1,
**dadurch gekennzeichnet, dass**
im Verfahrensschritt (B) den auszuführenden Operationen entsprechende Bewegungsräume des ersten Roboters (5) durch fest vorgegebene Hüllkugeln (4, 4₁, 4₂, ... ) definiert werden und die feingranularen Hüllquader (21_{1T}, 21_{2T}, ... ) so bestimmt werden, dass sie die Hüllkugeln (4, 4₁, 4₂, ... ) umgeben.

5. Verfahren nach einem der Ansprüche 1 bis 4,
**dadurch gekennzeichnet, dass**
nach dem Verfahrensschritt (C) in einem Verfahrensschritt (D) Schutzmaßnahmen festgelegt werden, wobei im Verfahrensschritt (D) alternativ oder kumulativ folgende Schutzmaßnahmen festgelegt werden durch:
- Positionierung von mindestens einem mehrere Lichtstrahlen enthaltenden Lichtgitter an den Rändern eines Sicherheitsbereiches (S), wobei bei einer Unterbrechung eines Lichtstrahles eine Sicherheitsfunktion ausgelöst wird,
- Positionierung von mindestens einem Laserscanner an den Rändern eines Sicherheitsbereiches (S), wobei der Laserscanner die Distanz zu einem eindringenden Objekt misst, so dass eine distanzabhängige Sicherheitsfunktion ausgelöst wird;
- Positionierung eines Sicherheitsschalters an den Rändern eines Sicherheitsbereiches (S), wobei der Sicherheitsschalter bei Öffnung einer mechanischen Begrenzung des Sicherheitsbereiches eine Sicherheitsfunktion (S) ausgelöst.

6. Verfahren nach einem der Ansprüche 1 bis 5
**dadurch gekennzeichnet, dass**
ein Sicherheitsbereich (S') für einen weiteren Roboter (5') bestimmt wird, für den eine weitere Trajektorie (1') vorgegeben ist, wobei der weitere Roboter (5') mit dem ersten Roboter (5) zusammenwirkt,
- die Verfahrensschritte (A) bis (C) gemäss Patentanspruch 1 für die weitere Trajektorie (1') ausgeführt werden und die pro Trajektorie (1, 1') der beiden Roboter (5, 5') bestimmten Sicherheitsbereiche (S, S') überlagert werden und dadurch ein Überlappungsbereich (25) entsteht;
- dass ein im Überlappungsbereich (25) enthaltener quaderförmiger Semaphor-Bereich (23) definiert wird, der eine Kreuzung der beiden Trajektorien (1, 1') enthält und gegenüber den optimierten Hüllquadern (22, 22') der beiden Sicherheitsbereiche (S, S') minimiert wird.

7. Verfahren nach Anspruch 6,
**dadurch gekennzeichnet, dass**
die für der Bestimmung der Sicherheitsbereiche (S, S') zugrundeliegenden optimierten Hüllquader (22, 22') als Basis verwendet werden, um die Trajektorie (1) des ersten Roboters (5) so neu zu bestimmen, dass die neu bestimmte Trajektorie (1ₙₑᵤ) den Semaphor-Bereich (23) meidet.

8. Verfahren nach Anspruch 7,
**dadurch gekennzeichnet, dass**
die Trajektorien (1, 1') der beiden Roboter (5, 5') und die neu bestimmte Trajektorie (1ₙₑᵤ) des ersten Roboters (5) in einer Trajektorienbibliothek einer übergeordneten fehlersicheren Steuerung (33) gespeichert werden.

9. Verfahren nach einem der Ansprüche 6 bis 8,
**dadurch gekennzeichnet, dass**
im Echtzeitbetrieb die Roboter (5, 5') eine Anfrage (34, 34', ) an die fehlersichere Steuerung (33) starten, um eine Erlaubnis zum durchfahren eines Semaphor-Bereiches zu erhalten.

10. Verfahren nach einem der Ansprüche 6 bis 9,
**dadurch gekennzeichnet, dass**
die Verfahrensschritte für eine Mehrzahl weiterer Roboter (5', 5'', ...) ausgeführt wird.

11. Robotersystem (30) enthaltend
- wenigstens einen Roboter (5) mit einer auf dem Roboter befindlichen lokalen Steuerung (32),
- eine übergeordnete fehlersichere Steuerung (31), **dadurch gekennzeichnet, dass** die übergeordnete fehlersichere Steuerung (31) eine zur Ausführung des Verfahrens nach einem der vorangehenden Ansprüche 1 bis 10 ausgebildet ist.

12. Computerprogramm, welches die Schritte des Verfahrens nach einem der Ansprüche 1 bis 10 ausführt, wenn es auf der übergeordneten fehlersicheren Steuerung (31) des Robotersystems (30) nach Anspruch 11 ausgeführt wird.

## Claims

1. Method for determining a safety zone (S) for a first robot (5), which carries out operations along a specified trajectory (1), wherein a safety zone (S) for a collision-free operation is determined by the following method steps:
(A) dividing the specified trajectory (1) into a plurality of subtraj ectories (1_{1T}, 1_{2T}, ...) ;
(B) determining a plurality of fine-grained envelope cuboids (21_{1T}, 21_{2T}, ..., ) around extreme points (7) of each subtraj ectory (1_{1T}, 1_{2T}, ...) ;
(C) determining a number of optimised envelope cuboids (22₁, 22₂, ... ) from an enlargement of individual fine-grained envelope cuboids (21_{1T}, 21_{2T}, ..., ) in relation to the volume occupied by the enlarged fine-grained envelope cuboids, wherein the optimised envelope cuboids (22₁, 22₂, ... ) determined in this way form the safety zone (S) for the trajectory (1).

2. Method according to claim 1,
**characterised in that**
in method step (B), movement spaces of the first robot (5) corresponding to the operations to be carried out are defined by envelope spheres (4, 4₁, 4₂, ... ), wherein each envelope sphere (4, 4₁, 4₂, ... ) represents the maximum claimed movement space per extreme point (7) and the fine-grained envelope cuboids (21_{1T}, 21_{2T}, ... ) are determined such that they surround the envelope spheres (4, 4₁, 4₂, ... ).

3. Method according to claim 1,
**characterised in that**
in method step (B), movement spaces of the first robot (5) corresponding to the operations to be carried out are defined by envelope ellipsoids (4, 4₁, 4₂, ... ), wherein each envelope ellipsoid (4, 4₁, 4₂, ... ) represents the maximum claimed movement space per extreme point (7) and the fine-grained envelope cuboids (21_{1T}, 21_{2T}, ... ) are determined such that they surround the envelope ellipsoids (4, 4₁, 4₂, ... ).

4. Method according to claim 1,
**characterised in that**
in method step (B), movement spaces of the first robot (5) corresponding to the operations to be carried out are defined by fixed, specified envelope spheres (4, 4₁, 4₂, ... ) and the fine-grained envelope cuboids (21_{1T}, 21_{2T}, ... ) are determined such that they surround the envelope spheres (4, 4₁, 4₂, ... ).

5. Method according to one of claims 1 to 4, **characterised in that**
following method step (C), protective measures are defined in a method step (D), wherein in method step (D), alternatively or cumulatively, the following protective measures are defined by:
- positioning at least one light grid containing a plurality of light beams at the edges of a safety zone (S), wherein a safety function is triggered when a light beam is interrupted,
- positioning at least one laser scanner at the edges of a safety zone (S), wherein the laser scanner measures the distance to an intruding object, so that a distance-dependent safety function is triggered;
- positioning a safety switch at the edges of a safety zone (S), wherein the safety switch triggers a safety function (S) when a mechanical limitation of the safety zone is opened.

6. Method according to one of claims 1 to 5, **characterised in that**
a safety zone (S') for a further robot (5') is determined, for which a further trajectory (1') is specified, wherein the further robot (5') interacts with the first robot (5),
- the method steps (A) to (C) according to claim 1 are carried out for the further trajectory (1') and the safety zones (S, S') determined for each trajectory (1, 1') of the two robots (5, 5') are overlaid, which produces an overlap zone (25);
- a cuboid-shaped semaphore zone (23) contained in the overlap zone (25) is defined, which contains a crossing of the two trajectories (1, 1') and is minimised compared to the optimised envelope cuboids (22, 22') of the two safety zones (S, S').

7. Method according to claim 6,
**characterised in that**
the optimised envelope cuboids (22, 22') on which the determination of the safety zones (S, S') is based are used as a basis for redetermining the trajectory (1) of the first robot (5) in such a way that the redetermined trajectory (1_{new}) avoids the semaphore zone (23).

8. Method according to claim 7,
**characterised in that**
the trajectories (1, 1') of the two robots (5, 5') and the redetermined trajectory (1_{new}) of the first robot (5) are stored in a trajectory library of a higher-level fail-safe controller (33).

9. Method according to one of claims 6 to 8,
**characterised in that**
in real-time operation, the robots (5, 5') start a query (34, 34') to the fail-safe controller (33), in order to obtain a permission to pass through a semaphore zone.

10. Method according to one of claims 6 to 9, **characterised in that**
the method steps are carried out for a plurality of further robots (5', 5", ...).

11. Robot system (30), containing
- at least one robot (5) with a local controller (32) situated on the robot,
- a higher-level fail-safe controller (31),
**characterised in that** the higher-level fail-safe controller (31) is embodied to carry out the method according to one of the preceding claims 1 to 10.

12. Computer program, which carries out the steps of the method according to one of claims 1 to 10 when it is executed on the higher-level fail-safe controller (31) of the robot system (30) according to claim 11.

## Revendications

1. Procédé de détermination d'une zone de sécurité (S) pour un premier robot (5) qui exécute des opérations le long d'une trajectoire (1) prédéfinie, dans lequel, pour un fonctionnement sans collisions, une zone de sécurité (S) est déterminée par les étapes de procédé suivantes :
(A) sub-division de la trajectoire (1) prédéfinie en une pluralité de trajectoires partielles (1_{1T}, 1_{2T}...) ;
(B) détermination d'une pluralité de parallélépipèdes rectangles d'enveloppe à grain fin (21_{1T}, 21_{2T}...) autour de points extrèmaux (7) d'une chaque trajectoire partielle (1_{1T}, 1_{2T}...) ;
(C) détermination d'un nombre de parallélépipèdes rectangles d'enveloppe optimisés (21_{1T}, 21_{2T}...) à partir d'un agrandissement de parallélépipèdes rectangles d'enveloppe à grain fin (21_{1T}, 21_{2T}...) individuels par rapport au volume occupé par les parallélépipèdes rectangles d'enveloppe à grain fin agrandis, dans lequel les parallélépipèdes rectangles d'enveloppe optimisés (21_{1T}, 21_{2T}...) ainsi définis forment la zone de sécurité (S) pour la trajectoire (1).

2. Procédé selon la revendication 1, **caractérisé en ce que** dans l'étape de procédé (B), des espaces de déplacement du premier robot (5) correspondant aux opérations à effectuer sont définis par des sphères d'enveloppe (4, 4_{1,} 4₂,...), dans lequel chaque sphère d'enveloppe (4, 4_{1,} 4₂,...) représente l'espace de déplacement maximal nécessité par point extrapole (7) et les parallélépipèdes rectangles d'enveloppe à grains fins (21_{1T}, 21_{2T},...) sont ainsi déterminés qu'ils entourent les sphères d'enveloppe (4, 4₁, 4₂, ...) .

3. Procédé selon la revendication 1, **caractérisé en ce que** dans l'étape de procédé (B), des espaces de déplacement du premier robot (5) correspondant aux opérations à effectuer sont définis par des ellipsoïdes d'enveloppe (4, 4₁, 4₂, ...), dans lequel chaque ellipsoïde d'enveloppe (4, 4₁, 4₂, ...) représente l'espace de déplacement maximal nécessité par point extrapole (7) et les parallélépipèdes rectangles d'enveloppe à grains fins (21_{1T}, 21_{2T}, ...) sont ainsi déterminés qu'ils entourent les ellipsoïdes d'enveloppe (4, 4₁, 4₂, ...) .

4. Procédé selon la revendication 1, **caractérisé en ce que** dans l'étape de procédé (B), des espaces de déplacement du premier robot (5) correspondant aux opérations à effectuer sont définis par des sphères d'enveloppe (4, 4₁, 4₂...) pré-définies fixement et les parallélépipèdes rectangles d'enveloppe à grains fins (21_{1T}, 21_{2T}, ...) sont ainsi déterminés qu'ils entourent les sphères d'enveloppe (4, 4₁, 4₂, ...) .

5. Procédé selon l'une des revendications 1 à 4, **caractérisé en ce qu'**après l'étape de procédé (C), des mesures de protection sont déterminées dans une étape de procédé (D), dans lequel dans l'étape de procédé (D), de manière alternative ou cumulative, les mesures de protection suivantes sont déterminées par :
- le positionnement d'au moins une grille lumineuse contenant plusieurs faisceaux lumineux sur les bords d'une zone de sécurité (S), dans lequel en cas d'interruption d'un faisceau lumineux, une fonction de sécurité est déclenchée,
- positionnement d'au moins un scanner laser sur les bords d'une zone de sécurité (S), dans lequel le scanner laser mesure la distance vers un objet pénétrant, de sorte qu'une fonction de sécurité fonction de la distance est déclenchée,
- positionnement d'un interrupteur de sécurité sur les bords d'une zone de sécurité (S), dans lequel l'interrupteur de sécurité déclenche une fonction de sécurité (S) à l'ouverture d'une délimitation mécanique de la zone de sécurité.

6. Procédé selon l'une des revendications 1 à 5, **caractérisé en ce qu'**une zone de sécurité (S') est déterminée pour un robot supplémentaire (5') pour lequel une trajectoire supplémentaire (1') est définie, dans lequel le robot supplémentaire (5') coopère avec le premier robot (5),
- les étapes de procédé (A) à (C) selon la revendication 1 sont exécutées pour la trajectoire supplémentaire (1') et les zones de sécurité (S, S') définies par trajectoire (1, 1') des deux robots (5, 5') sont superposées et il en ressort une zone de chevauchement (25) ;
- qu'une zone de sémaphore (23) en forme de parallélépipède rectangle contenue dans la zone de chevauchement (25) est définie, laquelle contient un croisement des deux trajectoires (1, 1') et est réduite par rapport aux parallélépipèdes rectangles optimisés (22, 22') des deux zones de sécurité (S, S').

7. Procédé selon la revendication 6, **caractérisé en ce que** les parallélépipèdes rectangles optimisés (22, 22') constituant la base de la détermination des zones de sécurité (S, S') sont employés comme base pour redéfinir la trajectoire (1) du premier robot (5) de telle façon que la trajectoire (1ₙₑᵤ) redéfinie évite la zone de sémaphore (23).

8. Procédé selon la revendication 7, **caractérisé en ce que** les trajectoires (1, 1') des deux robots (5, 5') et la trajectoire (1) redéfinie du premier robot (5) sont enregistrées dans une bibliothèque de trajectoires d'une commande à sécurité intégrée (33) supérieure.

9. Procédé selon l'une des revendications 6 à 8, **caractérisé en ce qu'**en fonctionnement en temps réel, les robots (5, 5') lancent une requête (34, 34') à la commande à sécurité intégrée (33) pour obtenir une autorisation de traverser une zone de sémaphore.

10. Procédé selon l'une des revendications 6 à 9, **caractérisé en ce que** les étapes de procédé sont exécutées pour une pluralité de robots supplémentaires (5', 5'', ...).

11. Système de robots (30) comprenant :
- au moins un robot (5) avec une commande locale (32) se trouvant sur le robot,
- une commande à sécurité intégrée (31) supérieure,
**caractérisé en ce que** la commande à sécurité intégrée (31) supérieure est conçue pour exécuter le procédé selon l'une des revendications précédentes 1 à 10.

12. Programme informatique, lequel exécute les étapes du procédé selon l'une des revendications 1 à 10 lorsqu'il est exécuté sur la commande à sécurité intégrée (31) supérieure du système de robots (30) selon la revendication 11.
